# EUROPEAN PATENT APPLICATION

(11) **EP 1 658 947 A1**
(43) Date of publication of application: **24.05.2006**
(21) Application number: 04027249.4
(22) Date of filing: 17.11.2004
(51) Int. Cl.: B29C 33/52

(54) **Apparatus comprising a mould with liquefying or subliming mould parts and moulding method**

(71) Applicant: SAAB AB, 581 88 Linköping (SE)
(72) Inventor: Krogager, Max, 582 42 Linköping (SE); Petersson, Mikael, 589 51 Linköping (SE); Andersson, Jan, 589 21 Linköping (SE); Weidmann, Björn, 590 31 Borensberg (SE)
(74) Representative: Holmberg, Magnus

(57) **Abstract**

Apparatus and method for moulding or curing an article, comprising a mould (1) where at least one part (2,3) of the mould comprises solid matter that at least partly converts to a liquid and/or a gas when sufficient energy is supplied to at least one part (2,3) of the mould after moulding or curing.

## Description

### Apparatus and method

### TECHNICAL FIELD OF THE INVENTION AND PRIOR ART

The present invention concerns an apparatus and method for moulding or curing an article, which utilize a mould.

Metal tools are usually used to give shape to articles, such as composite structures or plastics, while they are being cured. It is however sometimes very difficult to remove the finished articles from the tools after curing due to the rigidity of the tools.

US 2004/0070108 concerns a method for manufacturing a composite structure which uses a frame and selectively pressurizable forms. The forms define the interior surface of the composite structure and the frames define the structure's exterior surface. Composite material is wrapped around the forms which are then placed in the frame. Selective forms are pressurized and the composite material is co-cured together. Removal of the forms is facilitated by depressurizing the forms.

The above-referenced patent application also states that the forms may be configured to be shrinkable after the composite material is cured, allowing them to be easily removed from the composite structure. It is however not possible to utilize the methods disclosed in said patent application to manufacture a composite structure having an enclosed hollow cavity since it would not be possible to remove a form from the enclosed hollow cavity after curing the composite structure.

EP 0917943 discloses a process for producing a plastic moulded article having at least a partly hollow portion. The moulding is conducted using a core composed of a water-soluble material that is formed to have the shape of the hollow portion. A plastic material is injected over the surface of the core and the core is finally removed with water.

A disadvantage of such a process is that if there are any cracks in the plastic article, water may seep into these cracks adding weight to the article and, if the water freezes it may overstress or damage the article. Furthermore it would also not be possible to utilize such a method to manufacture a composite structure having a totally enclosed hollow cavity since it would not be possible to supply water to said cavity to dissolve the core.

### SUMMARY OF THE INVENTION

The object of the present invention is to provide an apparatus and method for moulding or curing an article of any geometry which facilitate the removal of the article from the moulding or curing apparatus.

This object is fulfilled by an apparatus having the features of claim 1, namely an apparatus comprising a mould where at least one part of the mould comprises solid matter that is at least partly converted to a liquid and/or a gas when sufficient energy is supplied to said at least one part of the mould after moulding or curing. The article may therefore be easily removed from the mould since the rigid mould is at least partly self-dissolving and/or self-vaporizing and therefore "disappears" at least in part after moulding or curing.

"Curing" is intended to refer to hardening, setting or drying. A material can be cured at room temperature or by heating, by using radiation such as UV-radiation or by any other means well known to a person skilled in the art. The inventive apparatus may also be used for moulding an article, such as a metal article, if sufficient energy for converting at least part of the mould to a liquid and/or gas can be supplied without destroying the article.

According to an embodiment of the invention the energy is supplied by heating said at least one part of the mould to a temperature above the curing/moulding temperature of the article. Alternatively radiation, such as microwave radiation, may be used to supply sufficient energy to said at least one part of the mould.

According to an embodiment of the invention the mould comprises a first material from which a substance is cleaved when said first material is heated and a second material that reacts with that cleaved substance to form a liquid and/or a gas. According to an embodiment of the invention the first material is an acid, such as citric acid or ascorbic acid, from which water or a H⁺ ion is cleaved and the second material is one of the following: a carbonate, a bicarbonate or a sulphate. For example at least one part of the mould comprises solid sodium bicarbonate and solid citric acid. On heating water is cleaved from the citric acid and the water reacts with the sodium bicarbonate to produce carbonic acid which then releases carbon dioxide gas.

The materials constituting the mould are chosen so that the mould remains rigid at least up to the curing/moulding temperature and is subsequently converted to a gas and/or liquid at a temperature above the curing/moulding temperature.

According to a further embodiment of the invention the mould further comprises at least one of the following: an emulsifier or a binder to hold the solid reactants together or a catalyst to catalyse the liquid- and/or gas-producing reaction.

According to a yet further embodiment of the invention said at least one part of the mould sublimes or liquefies once sufficient energy has been supplied to said at least one part of the mould.

According to an embodiment of the invention the mould is designed so that the gas and/or liquid produced is/are utilized to apply a pressure to at least part of the article. Such a pressure could for example be utilized to press part of an article against the shaping surfaces of the mould so that it better conforms to the shape of the mould or to remove any undesired pores formed in a laminated material during the manufacture of the laminated material. According to another embodiment of the invention the mould comprises at least one opening to allow gas and/or liquid to flow out after moulding or curing.

According to yet another embodiment of the invention the mould comprises a plurality of parts that are at least partly converted to a liquid and/or a gas on being subjected to different amounts of energy, such as on being heated to different temperatures. Said parts may therefore be selectively converted to a liquid and/or gas and for example used to selectively apply a pressure to different parts of the article at different times.

According to a further embodiment of the invention said at least one part of the mould is arranged to form an enclosed cavity in the article. The finished article may therefore contain an enclosed liquid- and/or gas-filled cavity.

According to an embodiment of the invention the liquid that is formed is a material, such as a resin, that is used to fill voids or cracks that occur in the article during the moulding or curing process or to provide a temporary or permanent surface coating on at least part of the article. In this way curing and surface treatment processes may be carried out in a single step. This repair material or surface coating material may be contained in the mould inside a membrane that is converted to a liquid/and or gas at a specific temperature for example.

The present invention also concerns a method for moulding or curing an article in apparatus according to any of the embodiments described above. The method comprises the steps of placing material, such as an un-cured composite material in/around/on a mould and curing the composite material. This is for example done by heating the material to its curing/moulding temperature. The method comprises the step of subsequently supplying energy to at least one part of the mould, such as by heating, so that said at least one part is at least partly converted into a liquid and/or gas. The gas and/or liquid that is formed and any remnants of the mould may then be easily removed from the article.

The apparatus and method according to any of the described embodiments is intended for use primarily but not exclusively for moulding or curing an article such as a composite, plastic or metal article.

Further advantages as well as advantageous features of the invention appear from the following description and the other dependent claims.

### BRIEF DESCRIPTION OF THE DRAWINGS

- Fig. 1: shows a un-cured composite material inside a mould according to an embodiment of the invention, and
- Fig. 2: shows a cured composite article that has been manufactured using a method according to an embodiment of the invention.

The following description and drawings are not intended to limit the present invention to the embodiment disclosed. The embodiment disclosed merely exemplifies the principles of the present invention.

### DETAILED DESCRIPTION OF AN EMBODIMENT OF THE INVENTION

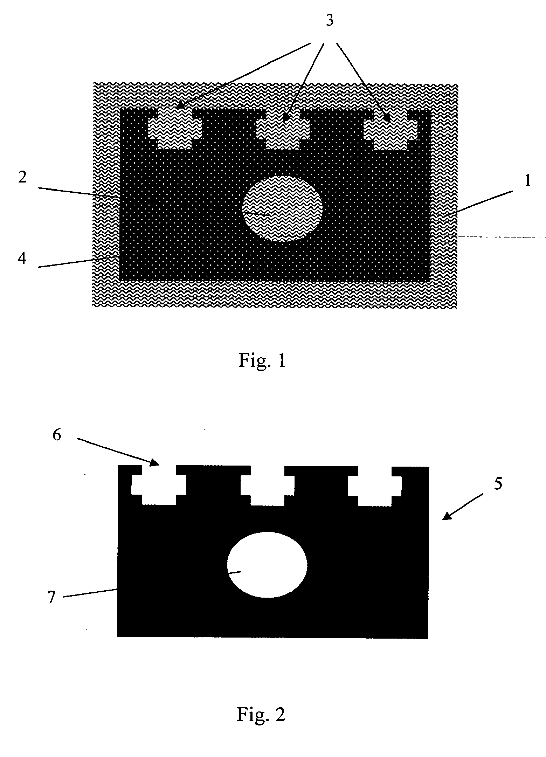

Figure 1 shows a mould 1 in cross-section. The mould 1 is made of sodium bicarbonate, citric acid and an emulsifier and has the consistency of a water-soluble painkiller tablet. The mould 1 comprises parts 2 and 3 that are used to produce a hollow cavity and a desired surface geometry respectively in a composite article.

Un-cured composite material 4 is placed inside the mould 1. The mould 1 and the un-cured composite material 4 is then placed inside an autoclave and the composite material is cured by heating to approximately 130°C whereby it conforms to the shape of the mould 1.

After curing the temperature inside the autoclave is increased in order to cleave water from the citric acid constituting the mould 1. The water cleaved from the citric acid reacts with the bicarbonate and produces carbon dioxide gas. The solid mould 1 is therefore entirely converted to a gas and therefore "disappears" leaving a finished cured article.

It is also envisaged that only a part or certain parts of a mould comprise sodium bicarbonate, citric acid and an emulsifier to facilitate the removal of a certain feature, or certain features of the cured article.

Figure 2 shows the finished, cured composite article 5 once the mould 1 has been completely converted to gas. Such an article, having a complex geometry 6 and an enclosed internal cavity 7 would be impossible to manufacture using existing techniques.

The invention is of course not in any way restricted to the embodiments thereof described above, but many possibilities to modifications thereof would be apparent to a man with ordinary skill in the art without departing from the basic idea of the invention as defined in the appended claims.

## Claims

1. Apparatus for moulding or curing an article, comprising a mould (1), ***characterized* in that** at least one part (2,3) of the mould comprises solid matter that is at least partly converted to a liquid and/or a gas when sufficient energy is supplied to said at least one part (2,3) of the mould after moulding or curing.

2. Apparatus according to claim 1, ***characterized* in that** energy is supplied by heating said at least one part of the mould (1) to a temperature above the curing/moulding temperature of the article.

3. Apparatus according to claim 1 or 2, ***characterized* in that** the mould (1) comprises a first material from which a substance is cleaved when energy is supplied to said material and a second material that reacts with that cleaved substance to form a liquid and/or a gas.

4. Apparatus according to claim 3, ***characterized* in that** the cleaved substance is water or a H⁺ ion.

5. Apparatus according to claim 3 or 4, ***characterized* in that** the first material is an acid such as citric acid or ascorbic acid.

6. Apparatus according to any of claims 3-5, ***characterized* in that** the second material is one of the following: a carbonate, a bicarbonate or a sulphate.

7. Apparatus according to any of the preceding claims, ***characterized* in that** the mould (1) further comprises at least one of the following: an emulsifier, a binder or a catalyst.

8. Apparatus according to claim 1, ***characterized* in that** said at least one part (2,3) of the mould (1) sublimes or liquefies once sufficient energy has been supplied to said at least one part (2,3) of the mould (1).

9. Apparatus according to any of the preceding claims,
***characterized* in that** the mould (1) is designed so that the gas and/or liquid produced is/are utilized to apply a pressure to at least part of the article.

10. Apparatus according to any of the preceding claims,
***characterized* in that** the mould (1) comprises at least one opening to allow gas and/or liquid to flow out after moulding or curing.

11. Apparatus according to any of the preceding claims,
***characterized* in that** the mould (1) comprises a plurality of parts that are at least partly converted to a liquid and/or a gas on being subjected to different amounts of energy.

12. Apparatus according to any of the preceding claims,
***characterized* in that** the said at least one part (2,3) is arranged to form an enclosed cavity (7) in the article.

13. Apparatus according to any of the preceding claims,
***characterized* in that** the liquid that is formed is a material, such as a resin, that is used to fill voids or cracks in the article or to provide a temporary or permanent surface coating.

14. Method for moulding or curing an article in apparatus according to any of claims 1-13 comprising the steps of placing material (4) in/around/on a mould (1) and moulding or curing the material (4), ***characterized* in that** it comprises the step of subsequently supplying energy to at least one part of the mould (2,3), such as by heating, so that said at least one part (2,3) is at least partly converted into a liquid and/or gas.

15. Use of an apparatus according to any of claims 1-13 or a method according to claim 14 for moulding or curing an article such as a composite, plastic or metal article.
